# EUROPEAN PATENT APPLICATION

(11) **EP 2 657 513 A2**
(43) Date of publication of application: **30.10.2013**
(21) Application number: 13164295.1
(22) Date of filing: 18.04.2013
(51) Int. Cl.: F03D 1/06

(54) **Flow modification device for rotor blade in wind turbine**

(30) Priority: 23.04.2012 US 201213453213
(71) Applicant: General Electric Company, Schenectady, New York 12345 (US)
(72) Inventor: Koegler, Klaus Ulrich, 48499 Salzbergen (DE)
(74) Representative: Bedford, Grant Richard

(57) **Abstract**

A rotor blade assembly 100 for a wind turbine 10 is disclosed. In one embodiment, the rotor blade assembly 100 includes a rotor blade 16 having exterior surfaces defining a pressure side 22, a suction side 24, a leading edge 26, and a trailing edge 28 extending between a tip 32 and a root 34. The rotor blade 16 further defines a span 44 and a chord 42. The rotor blade 16 assembly further includes a noise reducer 110 configured on an exterior surface of the rotor blade 16. The noise reducer 110 includes a plurality of noise reduction features 112. Each of the plurality of noise reduction features 112 defines a centerline. In a planform view, the centerline of each of the plurality of noise reduction features 112 is approximately parallel to a local flow streamline for that noise reduction feature at the trailing edge 28 of the rotor blade 16.

## Description

The present disclosure relates in general to wind turbine rotor blades, and more particularly to flow modification devices, such as noise reducers, configured on the rotor blades.

Wind power is considered one of the cleanest, most environmentally friendly energy sources presently available, and wind turbines have gained increased attention in this regard. A modem wind turbine typically includes a tower, generator, gearbox, nacelle, and one or more rotor blades. The rotor blades capture kinetic energy of wind using known foil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.
In many cases, various devices are attached to the rotor blades of wind turbines to perform various functions during operation of the wind turbines. These devices may frequently be attached adjacent to the trailing edges of the rotor blades, and may provide various flow modification functions. For example, noise reducers may be attached to the trailing edges of the rotor blades to reduce the noise and increase the efficiency associated with the rotor blade. However, typical prior art noise reducers have a variety of disadvantages, and may not adequately reduce the noise associated with typical rotor blades.

For example, currently known noise reducers may not account for various characteristics of the air flow past the rotor blades. This failure may impede the noise reduction characteristics of the noise reducers. In particular, currently known noise reducers are typically aligned with the trailing edge, such that the noise reduction features thereof, which may be for example, serrations or bristles, extend perpendicular to the trailing edge or parallel to a local chord line.

Further, as stated, many currently known noise reducers include a plurality of serrations or bristles. However, the serrations and/or bristles of many currently known noise reducers may have similar sizes and shapes throughout the length of the noise reducer. Thus, the noise reducer may fail to individually account for changes in the air flow characteristics throughout the length of the rotor blade.

These current configurations may impede currently known noise reducers from providing noise reduction benefits to rotor blades and wind turbines. For example, current testing of known noise reducer configurations has shown that serrations and bristles having these configurations provide noise reduction benefits that are well below the theoretical benefits.

Further, these current characteristics and the resulting lack of benefits may additionally apply to other various types of flow modification devices, such as vortex generators, riblet assemblies, active flow devices, circulation control devices, etc.

Thus, improved flow modification devices, and particularly noise reducers, for rotor blades are desired in the art. For example, noise reducers and other flow modification devices with improved noise reduction and flow modification features would be advantageous. Specifically, a noise reducer that accounts for various characteristics of the air flow past the rotor blade would be desired.

Various aspects and advantages of the invention will be set forth in part in the following description, or may be clear from the description, or may be learned through practice of the invention.

In one embodiment, a rotor blade assembly for a wind turbine is disclosed. The rotor blade assembly includes a rotor blade having exterior surfaces defining a pressure side, a suction side, a leading edge, and a trailing edge extending between a tip and a root. The rotor blade further defines a span and a chord. The rotor blade assembly further includes a noise reducer configured on an exterior surface of the rotor blade. The noise reducer includes a plurality of noise reduction features. Each of the plurality of noise reduction features defines a centerline. In a planform view, the centerline of each of the plurality of noise reduction features is approximately parallel to a local flow streamline for that noise reduction feature at the trailing edge of the rotor blade.

In another embodiment, a rotor blade assembly for a wind turbine is disclosed. The rotor blade assembly includes a rotor blade having exterior surfaces defining a pressure side, a suction side, a leading edge, and a trailing edge extending between a tip and a root. The rotor blade further defines a span and a chord. The rotor blade assembly further includes a flow modification device configured on an exterior surface of the rotor blade. The flow modification device includes a flow modification feature. The flow modification feature defines a centerline. In a planform view, the centerline of the flow modification feature is aligned with respect to a local flow streamline for the flow modification feature at the trailing edge of the rotor blade.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 is a perspective view of one embodiment of a wind turbine of the present disclosure;
FIG. 2 is a planform view of one embodiment of a rotor blade assembly of the present disclosure;
FIG. 3 is an opposing planform view of a portion of one embodiment of a rotor blade assembly of the present disclosure;
FIG. 4 is a cross-sectional view of one embodiment of a noise reducer of the present disclosure;
FIG. 5 is a cross-sectional view of another embodiment of a noise reducer of the present disclosure; and
FIG. 6 is a cross-sectional view of yet another embodiment of a noise reducer of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

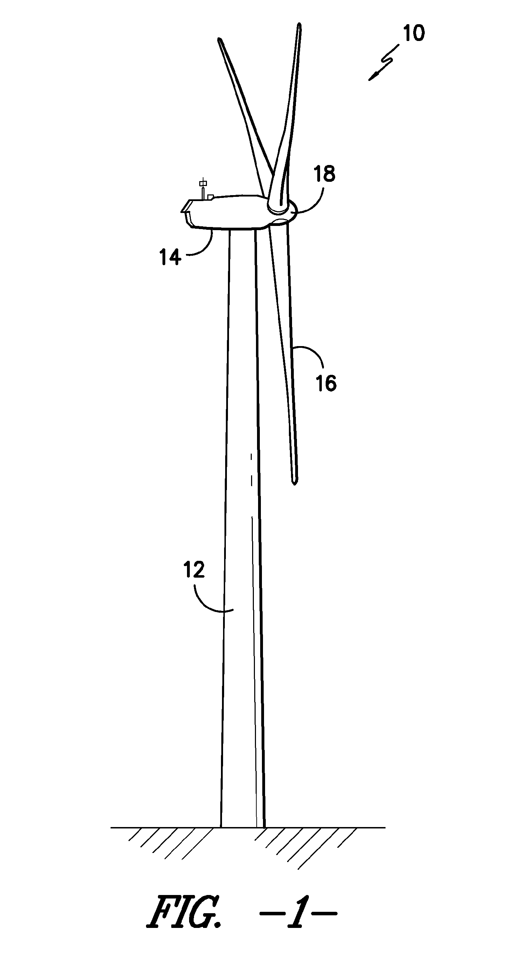

FIG. 1 illustrates a wind turbine 10 of conventional construction. The wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that embodiments of the invention are not limited to any particular type of wind turbine configuration.

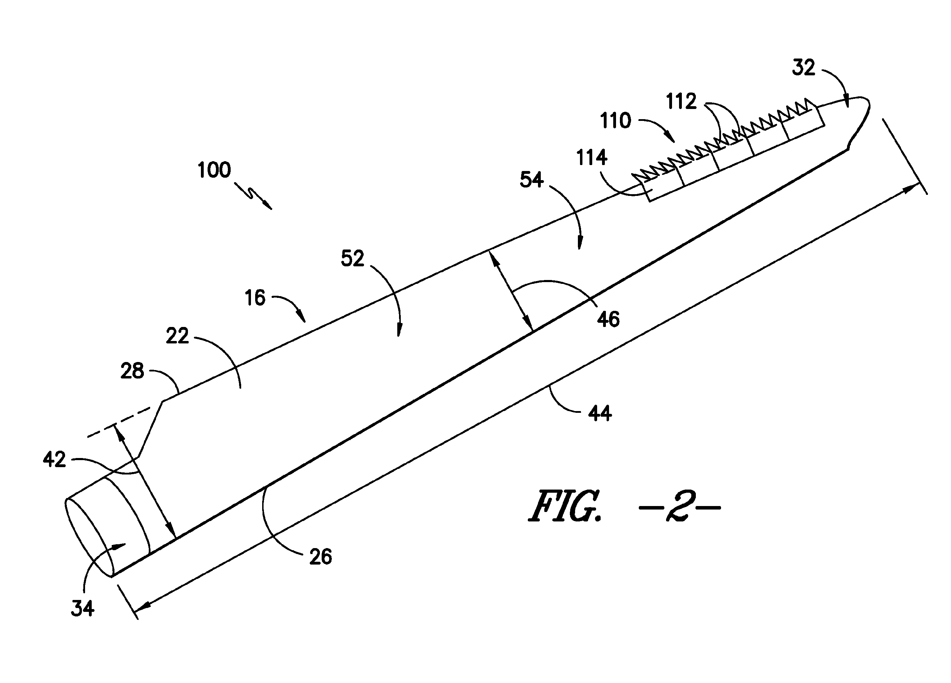

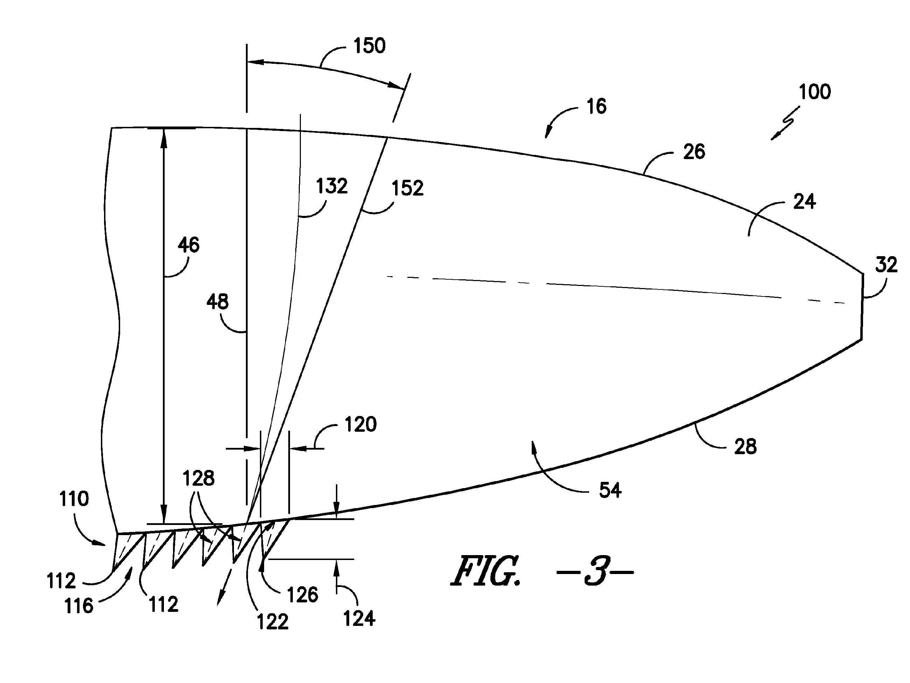

Referring to FIGS. 2 and 3, a rotor blade 16 according to the present disclosure may include exterior surfaces defining a pressure side 22 and a suction side 24 extending between a leading edge 26 and a trailing edge 28, and may extend from a blade tip 32 to a blade root 34. The exterior surfaces may be generally aerodynamic surfaces having generally aerodynamic contours, as is generally known in the art.

In some embodiments, the rotor blade 16 may include a plurality of individual blade segments aligned in an end-to-end order from the blade tip 32 to the blade root 34. Each of the individual blade segments may be uniquely configured so that the plurality of blade segments define a complete rotor blade 16 having a designed aerodynamic profile, length, and other desired characteristics. For example, each of the blade segments may have an aerodynamic profile that corresponds to the aerodynamic profile of adjacent blade segments. Thus, the aerodynamic profiles of the blade segments may form a continuous aerodynamic profile of the rotor blade 16. Alternatively, the rotor blade 16 may be formed as a singular, unitary blade having the designed aerodynamic profile, length, and other desired characteristics.

The rotor blade 16 may, in exemplary embodiments, be curved. Curving of the rotor blade 16 may entail bending the rotor blade 16 in a generally flapwise direction and/or in a generally edgewise direction. The flapwise direction may generally be construed as the direction (or the opposite direction) in which the aerodynamic lift acts on the rotor blade 16. The edgewise direction is generally perpendicular to the flapwise direction. Flapwise curvature of the rotor blade 16 is also known as pre-bend, while edgewise curvature is also known as sweep. Thus, a curved rotor blade 16 may be pre-bent and/or swept. Curving may enable the rotor blade 16 to better withstand flapwise and edgewise loads during operation of the wind turbine 10, and may further provide clearance for the rotor blade 16 from the tower 12 during operation of the wind turbine 10.

The rotor blade 16 may further define chord 42 and a span 44. As shown in FIG. 2, the chord 42 may vary throughout the span 44 of the rotor blade 16. Thus, a local chord 46 may be defined for the rotor blade 16 at any point on the rotor blade 16 along the span 44. A reference local chord line 48 may be drawn along a local chord 46, as shown in FIG. 3.

Additionally, the rotor blade 16 may define an inboard area 52 and an outboard area 54. The inboard area 52 may be a span-wise portion of the rotor blade 16 extending from the root 34. For example, the inboard area 52 may, in some embodiments, include approximately 33%, 40%, 50%, 60%, 67%, or any percentage or range of percentages therebetween, or any other suitable percentage or range of percentages, of the span 44 from the root 34. The outboard area 54 may be a span-wise portion of the rotor blade 16 extending from the tip 32, and may in some embodiments include the remaining portion of the rotor blade 16 between the inboard area 52 and the tip 32. Additionally or alternatively, the outboard area 54 may, in some embodiments, include approximately 33%, 40%, 50%, 60%, 67%, or any percentage or range of percentages therebetween, or any other suitable percentage or range of percentages, of the span 44 from the tip 32.

As illustrated in FIGS. 2 through 6, the present disclosure may further be directed to one or more rotor blade assemblies 100. A rotor blade assembly 100 according to the present disclosure includes a rotor blade 16 and one or more flow modification devices. Flow modification devices generally modify the air flow over the rotor blade 16 during operation of the wind turbine 10, thus providing various improved flow characteristics to the rotor blade 16. In exemplary embodiments, a flow modification device may be a noise reducer 110. In alternative embodiments, a flow modification device may be a vortex generator, riblet assembly, active flow device, circulation control device, or other suitable device. Flow modification devices are generally configured on an exterior surface of the rotor blade 16 to provide such various flow modification functions.

In general, a flow modification device, such as a noise reducer 110, etc., may be configured on a surface of the rotor blade 16. Noise reducers 110 may reduce the aerodynamic noise being emitted from the rotor blade 16 during operation of the wind turbine 10 and/or increase the efficiency of the rotor blade 16. In an exemplary embodiment of the present disclosure, a flow modification device may be configured on a surface of the rotor blade 16 adjacent the trailing edge 28 of the rotor blade 16. Alternatively, a flow modification device may be configured on a surface of the rotor blade 16 adjacent the leading edge 26 of the rotor blade 16, or adjacent the tip 32 or the root 34 of the rotor blade 16, or at any other suitable position on the rotor blade 16.

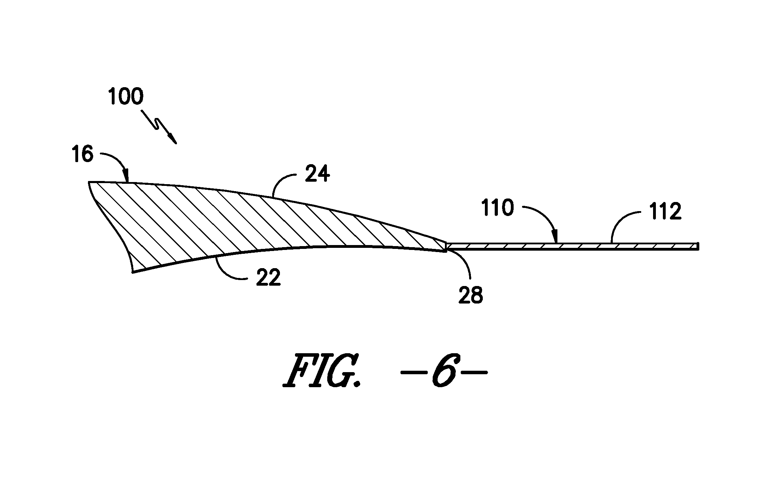

In exemplary embodiments, as shown in FIGS. 2 through 5, a flow modification device, such as a noise reducer 110, etc., may be configured on, such as mounted to, the pressure side 22 of the rotor blade 16. In alternative embodiments, a flow modification device may be configured on, such as mounted to, the suction side 24. In yet other alternative embodiments, a flow modification device may be configured on the rotor blade 16 on the trailing edge 28 as shown in FIG. 6 or the leading edge 26, such as between the pressure side 22 and the suction side 24.

For example, as shown in FIG. 6, a flow modification device may be configured on the trailing edge 28 between the pressure side 22 and the suction side 24. In some of these embodiments, the rotor blade 16 may be formed from one or more shell portions. For example, one shell portion may include the pressure side 22 and extend between the leading edge 26 and the trailing edge 28, while another shell portion may include the suction side 24 and extend between the leading edge 26 and the trailing edge 28. The flow modification device may be mounted between these shell portions such that a portion of the flow modification device is disposed in the interior of the rotor blade 16, while another portion extends from the rotor blade 16. Alternatively, the flow modification device may extend through a shell portion of the rotor blade 16 at a desired location, such as at the trailing edge 28. In further alternative embodiments, the flow modification device may be mounted directly to the exterior of the rotor blade 16 between the pressure side 22 and the suction side 24 through the use of, for example, a suitable adhesive or suitable mechanical fasteners. For example, in exemplary embodiments, the flow modification device may be mounted directly to the trailing edge 28. In still further exemplary embodiments, the flow modification device may be integral with the rotor blade 16, such that they are formed together from the same materials.

A flow modification device according to various aspects of the present disclosure includes one or more flow modification features. Each flow modification feature is a component of the flow modification device that performs a desired flow modification function. For example, as discussed, in exemplary embodiments, a flow modification device according to the present disclosure is a noise reducer 110. The noise reducer 110 includes a plurality of noise reduction features. In exemplary embodiments, the noise reduction features are serrations 112. In alternative embodiments, however, the noise reduction features may be bristles, brushes, rods, tufts, or other suitable features adapted to provide noise reduction characteristics.

In some embodiments when the flow modification device is a noise reducer 110, and as shown in FIGS. 2, 4 and 5, the noise reduction features, such as the serrations 112, etc., may extend from a base plate 114. In these embodiments, the base plate 114 may generally be that portion of the noise reducer 110 that is mounted to the rotor blade 16 to configure the noise reducer 110 on a surface of the rotor blade 16. Alternatively, as shown in FIG. 6, the noise reduction features may be mounted directly to the rotor blade 16, or may be an integral part of the rotor blade 16. For example, in embodiments wherein the noise reducer 110 is configured on the trailing edge 28, the trailing edge 28 may simply include the plurality of noise reduction features extending therefrom, and the noise reduction features may be integral with the trailing edge 28.

The noise reducer 110 may, in some embodiments, be formed from a plurality of noise reducer sections. Each section may include one or more the noise reduction features, and each section may further include a base plate portion. Alternatively, the noise reducer 110 may be a singular, unitary component.

As shown, in embodiments wherein the noise reduction features are serrations 112, adjacent serrations 112 may generally define indentations 116 therebetween. While in exemplary embodiments the serrations 112 are generally V-shaped, defining generally V-shaped indentations 116, in alternative embodiments the serrations 112 and indentations 116 may be U-shaped, or may have any other shape or configuration suitable for reducing the noise being emitted from and/or increasing the efficiency of the rotor blade 16 during operation of the wind turbine 10. For example, in some embodiments, the serrations 112 and indentations 116 may be generally sinusoidal or squared-sinusoidal.

As shown in FIG. 3, each of the noise reduction features, such as the serrations 112, etc., may have a width 120. The width 120 may be defined for each noise reduction feature at a base 122 of each noise reduction feature. Additionally, a length 124 may be defined for each noise reduction feature. The length 124 may be measured between the base 122 and a tip 126 of the noise reduction feature, and may be defined generally perpendicularly to the base 122. Further, each of the noise reduction features may have a centerline 128. The centerline 128 may extend through the tip 126 of the noise reduction feature, such as through the center of the tip 126, and through the base 122 of the noise reduction feature, such as through the center of the base 122, and may generally bisect the noise reduction feature.

It should be understood that, while exemplary embodiments of the noise reduction features, such as serrations 112, etc., are discussed below, a noise reduction feature according to the present disclosure may have any suitable characteristics, such as width 120, length 124, shape, or orientation, depending on the desired noise reduction characteristics for the noise reducer 110. Further, in exemplary embodiments, each individual noise reduction feature may have individual characteristics as required to achieve optimum noise reduction characteristics. In alternative embodiments, however, various groups of noise reduction features may have similar characteristics, or all noise reduction features may have similar characteristics, depending on the desired noise reduction characteristics for the noise reducer 110.

It should further be understood that the above discussion of noise reduction features further applies in general to flow modification features of any suitable flow modification devices.

As mentioned above, a local chord 46 may be defined for the rotor blade 16 at any point on the rotor blade 16 with respect to the span 44. Thus, for example, a local chord 46 may be defined for each of the flow modification features. For example, the local chord 46 may be measured along the span 44 at any point along the width 120 of a flow modification feature, or may be calculated as an average of the chord lengths throughout the width 120 of the flow modification feature.

As shown for example in FIGS. 2 and 3, flow modification devices and flow modification features thereof are oriented with respect to local flow streamlines over the rotor blade assembly 100 during operation of the wind turbine 10. Such orientation advantageously increases the flow modification benefits provided by the flow modification devices. For example, in the case of noise reducers 110, noise reduction features 112 having such orientations may provide significantly increased noise reduction benefits.

As illustrated in FIGS. 3, 4 and 5, the rotor blade assembly 100 of the present disclosure may, in operation, be subjected to an air flow. The air flow past the rotor blade assembly 100 may be visualized as flow streamlines. For example, the air flow over the pressure side 22 may be visualized as a flow streamline, and the air flow over the suction side 24 may also be visualized as a flow streamline. Further, local flow streamlines may be defined for the rotor blade 16 at any point on the rotor blade 16 along the span 44. Thus, for example, a local flow streamline may be defined for each of the flow modification features, such as noise reduction features, etc. For example, the local flow streamline may be measured along the span 44 at any point along the width 120 of a flow modification feature, or may be calculated as an average of the local flow streamlines throughout the width 120 of a flow modification feature. The local flow streamline for a flow modification feature may be a local pressure side flow streamline 130 or a local suction side flow streamline 132. Alternatively, the local flow streamline may be calculated based on the local pressure side flow streamline 130 and the local suction side flow streamline 132, and may be, for example, a local average flow streamline.

Further, as shown in FIG. 3, it has been discovered by the present inventors that, when viewed from a planform view, local flow streamlines are at least partially generally curvilinear as they pass over a rotor blade 16. Thus, rather than flowing generally linearly between a leading edge 26 and a trailing edge 28, a local flow streamline may curve throughout at least a portion thereof as it flows from the leading edge 26 towards the trailing edge 28. Such curving may occur towards the trailing edge 28 as the local flow streamline approaches the trailing edge 28. Such curving may generally be towards the root 34, as shown, or alternatively outboard towards the tip 32. This effect is stronger than would typically be expected. It had previously generally been assumed that local flow streamlines were generally linear or curvilinear along an arc with a center at a local chord-wise centerpoint of the rotor blade 16 and with a relative radius equivalent to the local span-wise position on the rotor blade 16. Flow modification devices were aligned based on this assumption. However, the present inventors have discovered that the curvilinear streamlines, when viewed in a planform view, can be convex and/or concave, and have smaller relative radii than previously assumed. The present inventors have thus discovered that local flow streamlines follow a curvature that is different from that previously assumed.

The flow modification features may, in exemplary embodiments, be oriented with respect to a local flow streamline for each serration 112 to optimize the noise reduction characteristics of the noise reducer 110. As shown in FIGS. 2 and 3, the centerline 128 of each flow modification feature is aligned with respect to a local flow streamline, such as a local pressure side, suction size, or average flow streamline. In exemplary embodiments as shown, the centerline 128 of each flow modification feature is approximately parallel to a local flow streamline for that flow modification feature when viewed in a planform view, such as the view shown in FIGS. 2 and 3. Specifically, in the planform view, the centerline 128 of each flow modification feature is approximately parallel to a local flow streamline at the trailing edge 28 of the rotor blade 16. In other words, the centerline 128 of each flow modification feature is approximately parallel to a local flow streamline at the point where, in the planform view, the local flow streamline leaves or exits off of the rotor blade 16. These embodiments are particularly advantageous in noise reducer applications, which noise reduction features, such as serrations, having centerlines 128 that are aligned as such with a local flow streamline.

Each flow modification feature that is aligned such that the centerline 128 thereof is approximately parallel to a local flow streamline at the trailing edge 28 may define an angle 150 with respect to the local chord line 48 for that flow modification feature. Thus, a reference line 152 that is tangent to the local flow streamline at the trailing edge 28 (and which is parallel to the centerline 128) may be at an angle 150 to the local chord line 48 for that flow modification feature. In some embodiments, each of the plurality of flow modification features may define an angle 150 that is between approximately 5 degrees and approximately 40 degrees. Thus, the flow modification device may be positioned on the rotor blade 16 such that all flow modification features are oriented within this range. In exemplary embodiments, this positioning is within the outboard area 54.

In other embodiments, the centerline 128 of a flow modification feature may define any suitable angle 150. Thus, a flow modification feature may be positioned at any suitable location, whether entirely within the outboard area 54, entirely within the inboard area 52, or within both the inboard and outboard areas.

In other embodiments wherein a flow modification feature is aligned with respect to a local flow streamline, the centerline 128 may be offset from the local flow streamline at the trailing edge 28. For example, in some embodiments, the centerline may be offset at a 45 degree or 90 degree angle when viewed from a planform view. Such alignment with respect to a local flow streamline may allow the flow modification features to better interact with the air flow, thus improving the flow modification characteristics of the flow modification device.

As discussed above, in exemplary embodiments, each individual flow modification feature, such as a noise reduction feature, such as in exemplary embodiments serration 112, may have individual characteristics, such as width 120, length 124, shape, or orientation, as required to achieve optimum noise reduction characteristics. Further, in some embodiments, each individual flow modification feature is individually tailored dependent upon a variety of factors. Tailoring in some embodiments may be with respect to the local flow streamlines, as discussed above, as well as other such factors including but not limited to location along the span 44, local chord 46, width 120, length 124, bend angle (discussed below), and/or thickness (discussed below). It should be understood that the factors for tailoring the individual flow modification features are not limited to those disclosed above. Rather, any suitable factor discussed herein or otherwise is within the scope and spirit of the present disclosure.

In some embodiments, flow modification features, such as noise reduction features, and particularly serrations 112 may, in exemplary embodiments, be optimized with respect to the local chords 46 for each flow modification feature to optimize the flow modification characteristics of the flow modification device. For example, in some embodiments, the length 124 of a flow modification feature may be in the range between approximately 5% and approximately 15% of the local chord 46 for the flow modification feature. In other embodiments, the length 124 of a flow modification feature may be approximately 10% of the local chord 46 for the flow modification feature. It should be understood, however, that the present disclosure is not limited to flow modification features having certain lengths 124 as discussed above, but rather that any suitable flow modification feature with any suitable length 124 is within the scope and spirit of the present disclosure.

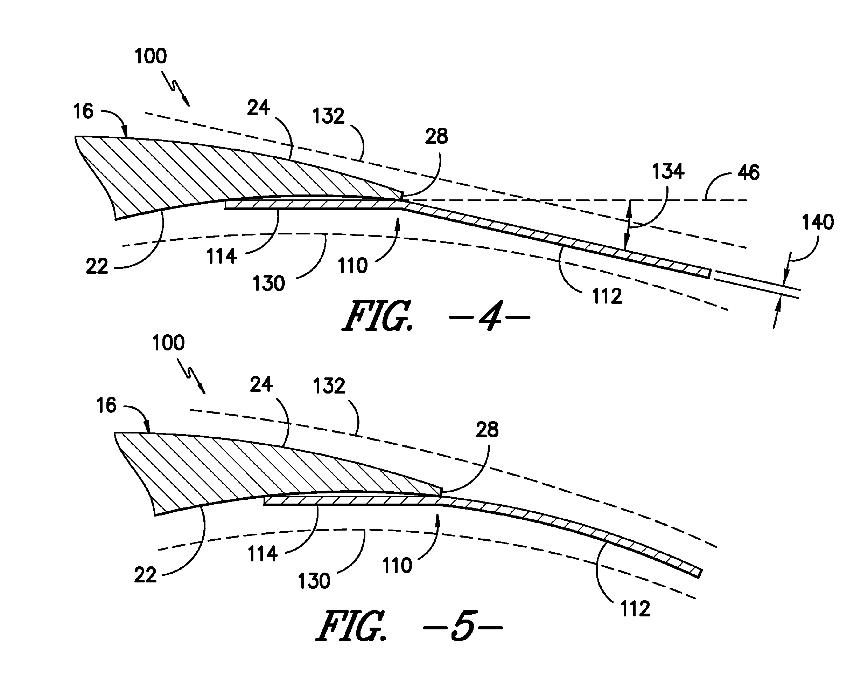

As illustrated in FIGS. 4 and 5, flow modification features may, in exemplary embodiments, be further oriented with respect to a local flow streamline for each flow modification feature to optimize the flow modification characteristics of the flow modification device. For example, as shown, a cross-section of a flow modification feature may be approximately parallel to a local flow streamline. For example, FIGS. 4 and 5 illustrate the cross-section of a serration 112 being approximately parallel to the local suction side flow streamline 132. However, the cross-section of a flow modification feature may alternatively or additionally be approximately parallel to, for example, the local pressure side flow streamline 130 or the local average flow streamline.

Additionally or alternatively, as shown in FIG. 4, a flow modification feature may define a bend angle 134. The bend angle 134 may be defined with respect to the local chord 46 for the flow modification feature. In exemplary embodiments, the bend angle 134 may be calculated based on a local flow streamline, in order to optimize flow modification with respect to the local flow streamline and the individual flow modification feature. For example, the bend angle 134 may be calculated such that the flow modification feature extending at the bend angle 134 may approximate the local flow streamline. In some embodiments, the bend angle 134 may be calculated based on a local flow streamline such that a cross-section of the flow modification feature extending at the bend angle 134 is approximately parallel to the local flow streamline.

In some embodiments, as shown in FIG. 4, the cross-section of the flow modification feature may be generally linear. The linear cross-section may, in exemplary embodiments, approximate a local flow streamline and/or be approximately parallel to the local flow streamline. In alternative embodiments, as shown in FIG. 5, the cross-section of the flow modification feature may be generally curvilinear. The curvilinear cross-section may, in exemplary embodiments, approximate a local flow streamline and/or be approximately parallel to the local flow streamline.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A rotor blade assembly for a wind turbine, comprising:
   a rotor blade having exterior surfaces defining a pressure side, a suction side, a leading edge, and a trailing edge extending between a tip and a root, the rotor blade further defining a span and a chord; and,
   a noise reducer configured on an exterior surface of the rotor blade, the noise reducer comprising a plurality of noise reduction features, each of the plurality of noise reduction features defining a centerline,
   wherein in a planform view the centerline of each of the plurality of noise reduction features is approximately parallel to a local flow streamline for that noise reduction feature at the trailing edge of the rotor blade.
2. The rotor blade assembly of clause 1, wherein in the planform view the centerline of each of the plurality of noise reduction features further defines an angle with respect to a local chord line for that noise reduction feature of between approximately 5 degrees and approximately 40 degrees.
3. The rotor blade assembly of any preceding clause, wherein each of the plurality of noise reduction features is individually tailored.
4. The rotor blade assembly of any preceding clause, wherein the local flow streamline is a suction side local flow streamline.
5. The rotor blade assembly of any preceding clause, wherein each of the plurality of noise reduction features defines a length, and wherein the length of each of the plurality of noise reduction features is in the range between approximately 5% and approximately 15% of a local chord for that noise reduction feature.
6. The rotor blade assembly of any preceding clause, wherein the length of each of the plurality of serrations is approximately 10% of the local chord for that noise reduction feature.
7. The rotor blade assembly of any preceding clause, wherein a cross-section of each of the plurality of noise reduction features is approximately parallel to the local flow streamline.
8. The rotor blade assembly of any preceding clause, wherein the cross-section of each of the plurality of noise reduction features is generally linear.
9. The rotor blade assembly of any preceding clause, wherein the cross-section of each of the plurality of noise reduction features is generally curvilinear.
10. The rotor blade assembly of any preceding clause, wherein each of the plurality of noise reduction features is a serration.
11. A wind turbine comprising:
   a plurality of rotor blades, each of the plurality of rotor blades having exterior surfaces defining a pressure side, a suction side, a leading edge, and a trailing edge extending between a tip and a root, each of the plurality of rotor blades further defining a span and a chord; and,
   a noise reducer configured on an exterior surface of one of the plurality of rotor blades, the noise reducer comprising a plurality of noise reduction features, each of the plurality of noise reduction features defining a centerline,
   wherein in a planform view the centerline of each of the plurality of noise reduction features is approximately parallel to a local flow streamline for that noise reduction feature at the trailing edge of the rotor blade.
12. The wind turbine of claim any preceding clause, wherein in the planform view the centerline of each of the plurality of noise reduction features further defines an angle with respect to a local chord line for that noise reduction feature of between approximately 5 degrees and approximately 40 degrees.
13. The wind turbine of any preceding clause, wherein each of the plurality of noise reduction features is individually tailored.
14. The wind turbine of any preceding clause, wherein the local flow streamline is a suction side local flow streamline.
15. The wind turbine of any preceding clause, wherein each of the plurality of noise reduction features defines a length, and wherein the length of each of the plurality of noise reduction features is in the range between approximately 5% and approximately 15% of a local chord for that noise reduction feature.
16. The wind turbine of any preceding clause, wherein the length of each of the plurality of serrations is approximately 10% of the local chord for that noise reduction feature.
17. The wind turbine of any preceding clause, wherein a cross-section of each of the plurality of noise reduction features is approximately parallel to the local flow streamline.
18. The wind turbine of any preceding clause, wherein the cross-section of each of the plurality of serrations is generally linear.
19. The wind turbine of any preceding clause, wherein the cross-section of each of the plurality of serrations is generally curvilinear.
20. A rotor blade assembly for a wind turbine, comprising:
   a rotor blade having exterior surfaces defining a pressure side, a suction side, a leading edge, and a trailing edge extending between a tip and a root, the rotor blade further defining a span and a chord; and,
   a flow modification device configured on an exterior surface of the rotor blade and comprising a flow modification feature, the flow modification feature defining a centerline,
   wherein in a planform view the centerline of the flow modification feature is aligned with respect to a local flow streamline for the flow modification feature at the trailing edge of the rotor blade.

## Claims

1. A rotor blade assembly (100) for a wind turbine (10), comprising:
a rotor blade (16) having exterior surfaces defining a pressure side (22), a suction side (24), a leading edge (26), and a trailing edge (28) extending between a tip (32) and a root (34), the rotor blade (16) further defining a span (44) and a chord (42); and
a noise reducer (10) configured on an exterior surface of the rotor blade (16), the noise reducer (110) comprising a plurality of noise reduction features (112), each of the plurality of noise reduction features (112) defining a centerline,
wherein in a planform view the centerline of each of the plurality of noise reduction features (112) is approximately parallel to a local flow streamline for that noise reduction feature at the trailing edge (28) of the rotor blade (16).

2. The rotor blade assembly (100) of claim 1, wherein in the planform view the centerline of each of the plurality of noise reduction features (112) further defines an angle (150) with respect to a local chord line for that noise reduction feature of between approximately 5 degrees and approximately 40 degrees.

3. The rotor blade assembly (100) of any preceding claim, wherein each of the plurality of noise reduction features (112) is individually tailored.

4. The rotor blade assembly (100) of any preceding claim, wherein the local flow streamline is a suction side local flow streamline.

5. The rotor blade assembly (100) of any preceding claim, wherein each of the plurality of noise reduction features (112) defines a length, and wherein the length of each of the plurality of noise reduction features (112) is in the range between approximately 5% and approximately 15% of a local chord for that noise reduction feature.

6. The rotor blade assembly (100) of any preceding claim, wherein the length of each of the plurality of serrations is approximately 10% of the local chord for that noise reduction feature.

7. The rotor blade assembly (100) of any preceding claim, wherein a cross-section of each of the plurality of noise reduction features (112) is approximately parallel to the local flow streamline.

8. The rotor blade assembly (100) of any preceding claim, wherein the cross-section of each of the plurality of noise reduction features (112) is generally linear.

9. The rotor blade assembly (100) of any preceding claim, wherein the cross-section of each of the plurality of noise reduction features (112) is generally curvilinear.

10. The rotor blade assembly (100) of any preceding claim, wherein each of the plurality of noise reduction features (112) is a serration.

11. A wind turbine (10) comprising:
a plurality of rotor blades (16), each of the plurality of rotor blades (16) having exterior surfaces defining a pressure side (22), a suction side (24), a leading edge (26), and a trailing edge (28) extending between a tip and a root, each of the plurality of rotor blades further defining a span and a chord; and
a noise reducer (110) configured on an exterior surface of one of the plurality of rotor blades (16), the noise reducer comprising a plurality of noise reduction features, each of the plurality of noise reduction features defining a centerline,
wherein in a planform view the centerline of each of the plurality of noise reduction features (112) is approximately parallel to a local flow streamline for that noise reduction feature at the trailing edge (28) of the rotor blade (16).

12. The wind turbine (10) of claim 11, wherein in the planform view the centerline of each of the plurality of noise reduction features (112) further defines an angle with respect to a local chord line for that noise reduction feature of between approximately 5 degrees and approximately 40 degrees.

13. The wind turbine (10) of claim 11 or claim 12, wherein each of the plurality of noise reduction features (112) is individually tailored.

14. The wind turbine (10) of any of claims 11 to 13, wherein the local flow streamline is a suction side local flow streamline.

15. The wind turbine (10) of any of claims 11 to 14, wherein each of the plurality of noise reduction features (112) defines a length, and wherein the length of each of the plurality of noise reduction features (112) is in the range between approximately 5% and approximately 15% of a local chord for that noise reduction feature.
